Europäisches Patentamt

European Patent Office

Office européen des brevets

(19)

(11) Publication number: **0 035 327**
**B1**

(12) **EUROPEAN PATENT SPECIFICATION**

(45) Date of publication of patent specification: **01.06.83**

(51) Int. Cl.³: **F 16 D 65/02**

(21) Application number: **81300495.9**

(22) Date of filing: **05.02.81**

(54) **Improvements in or relating to railway disc brakes.**

(30) Priority: **04.03.80 GB 8007267**

(43) Date of publication of application:
**09.09.81 Bulletin 81/36**

(45) Publication of the grant of the patent:
**01.06.83 Bulletin 83/22**

(84) Designated Contracting States:
**DE FR**

(56) References cited:
**DE - A - 2 036 107**
**GB - A - 1 345 174**
**GB - A - 1 527 135**

(73) Proprietor: **LUCAS INDUSTRIES public limited company**
**Great King Street**
**Birmingham, B19 2XF (GB)**

(72) Inventor: **Ottewell, Gerlad Allan**
**16 Newfield Close**
**Solihull West Midlands (GB)**

(74) Representative: **Simpson, Ronald Duncan Innes et al,**
**A.A.Thornton & Co. Northumberland House 303-306 High Holborn**
**London WCIV 7LE (GB)**

Courier Press, Leamington Spa, England.

Improvements in or relating to railway disc brakes

This invention relates to railway disc brakes and in particular to a brake lining carrier or shoe adapted to permit easy replacement of a worn brake pad.

It is known to provide a brake lining carrier with a slot of dovetail section in its front face, the slot being open at one end of the carrier to allow a brake lining to be mounted on the carrier by sliding a projection on the rear of the lining into the dovetail slot. To prevent the projection sliding out of the slot, a retainer is fitted to the carrier and adjusted to extend across the dovetail slot adjacent its open end so that the end of the projection abuts against the retainer and the lining is held captive on the carrier.

When the lining becomes worn and needs to be replaced, the retainer is removed to a position in which it is clear of the slot and the projection can then slide out of the slot unimpeded. Various forms of retainer are known. For example, some are mounted on the carrier to move in a direction perpendicular to the front face of the carrier, while others are mounted pivotally to the carrier. Still others are mounted to move laterally of the carrier parallel to the front face, and the invention relates in particular to brake lining carriers of this latter kind.

In all cases releasable means are provided for locking the retainer releasably in the operative position in which it blocks the end of the carrier slot.

In British Patent Specification No. 1345174 there are disclosed two forms of retainer for a brake lining carrier, both of which are mounted to move laterally of the carrier. In the first construction the retainer includes a spring steel limb with a turned down tongue or pin at its free end which engages the carrier to lock the retainer in its operative position. In the second construction the retainer is locked in position by a pin mounted at the side of the carrier and adapted to engage in a recess in the retainer under the action of a spring. In both constructions the retainer includes a main part which serves to block the open end of the carrier slot, received slidably in a transverse groove formed in the front face of the carrier.

The main disadvantage of these retainers is that they are easily removed completely from the carrier. Thus there is a risk that they will be lost or at least not replaced during a pad replacement operation (although it is not essential for them to be removed entirely for pad replacement) and in the event of a failure, e.g. of the spring steel limb or the spring acting on the locking pin there is a danger that the retainer will become detached from the carrier.

According to the present invention there is provided a brake lining carrier for a railway brake, comprising a slot in the front face thereof for receiving a brake pad slidingly engaged therewith through an open end of the slot, a groove extending laterally across the front face of the carrier adjacent said open end of the slot, a retainer movably mounted on the carrier and including a part adapted to slide in said groove, the retainer being slidable transversely of the carrier between an operative position in which said part blocks the open end of the slot and an inoperative position in which said part is clear of the slot, and releasable means for locking the retainer in said operative position, said transverse movement of the retainer being limited in both directions by a pin and slot connection comprising an elongate slot in the retainer and a pin passing through the slot and being fixed to the carrier.

With a brake lining carrier of this form, the retainer, once fitted, will always remain attached to the carrier and any risk of it being lost is eliminated.

In a preferred construction the pin is provided by a threaded bolt having a head of diameter greater than the width of the retainer slot, and screwed into the retainer without clamping the retainer. This feature simplifies the retainer and makes it easy to mount on the carrier, which is further assisted if the slot is formed in a portion of retainer which is positioned against the end face of the carrier.

Pad replacement operations are assisted if the retainer is prevented from rotating about the pin by providing the lateral groove with an undercut to define a rearwardly facing shoulder against which the retainer part slidable in the groove abuts.

A preferred carrier according to the invention has a mounting pin, by means of which it is connected to a bifurcated caliper lever, and in the same manner as described in British Patent Specification 1527135 of our subsidiary company, Girling Limited, this pin is biased longitudinally of the carrier. The end of the pin protrudes from the end face of the carrier and engages in a recess in the retainer to lock it in its operative position, the pin being retractable against the spring bias to disengage the recess and release the retainer for movement to its inoperative position. Thus the releasable locking means for the retainer are provided by the mounting pin and its spring so that an additional spring is unnecessary and a further cost saving made.

From the foregoing it will be understood that the brake lining carrier of the invention has a retainer which has a simple form, is inexpensive to manufacture and is easy to mount securely on the shoe.

A better understanding of the invention will be had from the following detailed description which is given by way of example with reference to the accompanying drawings, in which:—

Figure 1 is a side view showing part of a brake lining carrier with a brake pad mounted thereon;

Figure 2 is a top view of the lining carrier; and

Figure 3 is an end view of the lining carrier and pad, and shows a slight modification.

The brake lining carrier or shoe illustrated in the drawings comprises a plate 1 having a longitudinal slot 2 of dovetail section in its front face for receiving a projection 3 of complementary shape provided on the rear of the brake pad 4. The slot 2 is open at the end of the plate 1 which is shown in the drawings to allow the projection 3 to slide into and out of the slot during mounting and removal of the pad 4. Extending across the full width of the front face of the plate 1 adjacent the open end of the slot is a groove 5 of L-shaped cross-section defining a rearwardly directed shoulder 6.

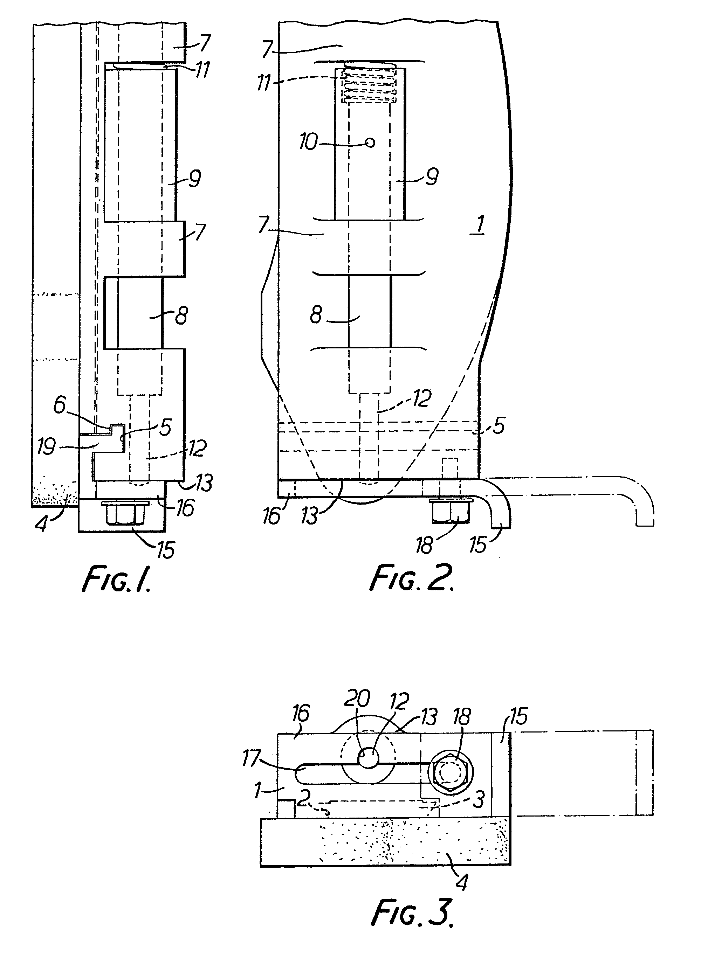

On its rear the plate 1 has integral lugs 7 in which a mounting pin 8 is journalled for connecting the shoe pivotally to a bifurcated caliper lever (not shown). Between two of the lugs a sleeve 9 is fitted over the pin 8 and rendered fast with it by a radial pin 10, and a spring 11 is interposed between the sleeve and one of the lugs 7 for biasing the sleeve, and hence the pin, downwardly as seen in Figures 1 and 2. The pin 8 has an extension 12 which normally protrudes slightly through the end face 13 of the shoe. However, the pin extension 12 can be retracted into the shoe on compression of spring 11, for reasons which will become clear.

A retainer 15 is mounted on the end of the shoe and includes a first part 16 which is slidable against the end face 13 and has a slot 17 through which a bolt 18 passes. The bolt is screwed into the shoe but does not clamp the retainer against the end face 13. A second part 19 of the retainer 15 slides in the groove 5 and includes a lip which engages the shoulder 6 to prevent the retainer pivoting about the bolt 18 when there is no pad 4 mounted on the shoe.

The retainer 15 can slide laterally with respect to the shoe between two end positions determined by the bolt 18 engaging the ends of the slot 17, the end positions corresponding to an operative position (shown in full lines in Figures 2 and 3) in which the retainer part 19 blocks the open end of the slot 2 and prevents the pad projections 3 sliding out of the slot 2, and an inoperative position (shown in chain-dot lines in Figures 2 and 3) in which the retainer is clear of slot 2 so that the brake pad 4 can be removed and replaced without being impeded by the retainer.

The retainer part 16 which slides against the shoe face 13 has a dimple, or notch 20 as shown in Figure 3, in which the extension 12 of the mounting pin engages when the retainer is in its operative position, for locking the retainer in this position. To facilitate adjustment of the retainer to its inoperative position the pin may be provided with an element, such as an extension of sleeve pin 10, to allow the mounting pin to be pulled back against the bias of the spring 11 to disengage the pin extension 12 from the retainer 15.

It will be noted by those skilled in the art that the retainer 15 is of simple construction and easily assembled together with the shoe. In addition the spring 11 whose primary function is to reduce rattle also serves to lock the retainer releasably in its operative position, so that additional springs are eliminated. Thus, the advantages of an effective inexpensive retainer which permits easy pad replacement are secured.

## Claims

1. A brake lining carrier for a railway brake, comprising a slot (2) in the front face thereof for receiving a brake pad (3,4) slidingly engaged therewith through an open end of the slot, a groove (5) extending laterally across the front face of the carrier adjacent said open end of the slot, a retainer (16) movably mounted on the carrier and including a part (19) adapted to slide in said groove, the retainer being slidable transversely of the carrier between an operative position in which said part (19) blocks the open end of the slot (2) and an inoperative position in which said part is clear of the slot, and releasable means for locking the retainer in said operative position characterised in that said transverse movement of the retainer is limited in both directions by a pin and slot connection comprising an elongate slot (17) in the retainer and a pin (18) passing through said slot and fixed to the carrier.

2. A brake lining carrier according to claim 1, wherein the pin comprises a threaded slot (18) having a head of diameter greater than the width of the slot (17) and screwed into the carrier without clamping the retainer therebetween.

3. A brake lining carrier according to claim 1 or 2, wherein the slot (17) is formed in a portion of the retainer positioned against the end face of the carrier.

4. A brake lining carrier according to claim 1, 2 or 3, wherein the releasable locking means comprises a carrier mounting pin (8) which is urged by a spring (11) towards the end of the carrier and the end (12) of which pin protrudes from the end face of the carrier and engages in a recess (20) in the retainer (16), the pin (8) being retractable against the spring bias to disengage the recess and release the retainer for movement to its inoperative position.

5. A brake lining carrier according to any preceding claim, wherein the lateral groove (5) is undercut to define a rearwardly facing shoulder (6) and the retainer part (19) slidable in the groove abuts said shoulder to retain the said part in the groove.

**Patentansprüche**

1. Bremsbelagträger für eine Eisenbahnbremse, bei dem in seine Vorderfläche ein Schlitz (2) eingearbeitet ist, in den von einem offenen Schlitzende her ein Bremsbelag (3, 4) einschiebbar ist, in der Nähe des offenen Schlitzendes über die Vorderfläche des Bremsbelagträgers sich eine Nut (5) in seitlicher Richtung erstreckt, auf dem Bremsbelagträger ein Halter (16) beweglich angeordnet ist und einen in der genannten Nut verschieblichen Abschnitt (19) hat, wobei der Halter quer zum Bremsbelagträger zwischen einer Arbeitsstellung, in welcher der Abschnitt (19) das offene Ende des Schlitzes (2) blockiert, und einer Ruhestellung, in welcher der genannte Abschnitt genügenden Abstand von Schlitz hat, verschiebbar ist, und ein freigebbares Mittel zum Blockieren des Halters in der genannten Arbeitsstellung vorgesehen ist, dadurch gekennzeichnet, daß die genannte Querbewegung des Halters in beiden Richtungen durch eine Zapfen/Schlitz-Verbindung begrenzt ist, zu der ein langer Schlitz (17) im Halter und ein den genannten Schlitz durch-dringender und am Bremsbelagträger befestig-ter Zapfen (18) gehören.

2. Bremsbelagträger nach Anspruch 1, dadurch gekennzeichnet, daß der Zapfen ein Gewindebolzen (18) ist, der einen Kopf von größerem Durchmesser als die Breite des Schlitzes (17) hat und in den Bremsbelagträger eingeschraubt ist, ohne den dazwischen angeordneten Halter festzuklemmen.

3. Bremsbelagträger nach Anspruch 1 oder 2, dadurch gekennzeichnet, daß der Schlitz (17) in einem Abschnitt des Halters ausgebildet ist, der an der Endfläche des Bremsbelgaträgers anliegt.

4. Bremsbelagträger nach Anspruch 1, 2 oder 3, dadurch gekennzeichnet, daß das freigebbare Blockiermittel ein Zapfen (8) zum Befestigen des Bremsbelagträgers ist, der von einer Feder (11) zum Ende des Bremsbelagträgers hin vorgespannt ist und dessen Endstück (12) aus der Endfläche des Bremsbelagträgers herausragt und in eine Vertiefung (20) im Halter (16) eingreift, wobei der Zapfen (8) gegen die Federvorspannkraft aus der Vertiefung herausziehbar ist, um den Halter zur Verstellung in seine Ruhestellung freizugeben.

5. Bremsbelagträger nach einem der Ansprüche 1 bis 4, dadurch gekennzeichnet, daß die in seitlicher Richtung verlaufende Nut (5) hinterschnitten ist, um eine nach hinten weisende Schulter (6) zu bilden, und der in der Nut verschiebbar Halterabschnitt (19) an der genannten Schulter derart anliegt, daß er in der Nut gehalten ist.

**Revendications**

1. Support de garniture de frein pour un frein ferroviaire, comprenant une fente (2) dans sa face frontale destinée à recevoir une garniture de frein (3,4) qui y est engagée de manière coulissante au travers d'une extrémité ouverte de la fente, une rainure (5) s'étendant latéralement au travers de la face frontale du support avoisinant ladite extrémité ouverte de la fente, une pièce de retenue (16) montée de façon à pouvoir se déplacer sur le support et incluant une partie (19) adaptée à coulisser dans ladite rainure, la pièce de retenue pouvant glisser transversalement par rapport au support entre une position de travail dans laquelle ladite partie (19) bloque l'extrémité ouverte de la fente (2) et une position de repos dans laquelle ladite partie est dégagée par rapport à la fente et des moyens relâchables pour bloquer la pièce de retenue dans ladite position de travail, caractérisé en ce que ledit mouvement transversal de ladite pièce de retenue est limité dans les deux sens par une attache à broche et fente comprenant une fente (17), de forme allongée, ménagée dans la pièce de retenue et une broche (18) passant à travers ladite fente et fixée au support.

2. Support de garniture de frein selon la revendication 1, dans lequel la broche comprend un boulon fileté (18) comportant une tête de plus grand diamètre que la largeur de la fente (17) et vissé dans le support sans serrer la pièce de retenue entre la tête et le support.

3. Support de garniture de frein selon la revendication 1 ou 2, dans lequel la fente (17) est formée dans une partie de la pièce de retenue située contre la face d'extrémité du support.

4. Support de garniture de frein selon la revendication 1, 2 ou 3, dans lequel le moyen de blocage relâchable comprend une broche (8) de monture dans le support, qui est sollicitée par un ressort (11) vers l'extrémité du support et dont l'extrémité (12) du support fait saillie hors de la face d'extrémité du support et s'engage dans un évidement (20) de la pièce de retenue (16), la broche (8) étant rétractable à l'encontre de la sollicitation du ressort pour dégager l'évidement et libérer la pièce de retenue pour lui permettre de venir dans sa position de repos.

5. Support de garniture de frein selon l'une quelconque des revendications précédentes, dans lequel la rainure latérale (5) est pourvue d'une dépouille pour définir un épaulement (6) faisant face vers l'arrière et la partie de pièce de retenue (19) pouvant coulisser dans la rainure porte contre ledit épaulement pour retenir ladite partie dans la rainure.

FIG. I.

FIG. 2.

FIG. 3.